# EUROPEAN PATENT SPECIFICATION

(11) **EP 1 816 695 B1**
(45) Date of publication and mention of the grant of the patent: **12.11.2008**
(21) Application number: 06001706.8
(22) Date of filing: 27.01.2006
(51) Int. Cl.: H01M 8/00, H01M 8/04, H01M 8/06, H01M 8/24

(54) **Combined heat and power plant**
Kombinierte Kraft-Wärme-Anlage
Installation pour la production couplée de chaleur et d'électricité

(43) Date of publication of application: 08.08.2007
(73) Proprietor: Electro Power Systems S.R.L., 10091 Alpignano, (TO) (IT)
(72) Inventor: Paolucci, Emilio, 10129 Torino (IT); Cherchi, Pierpaolo, 10141 Torino (IT); Quaglia, Alberto, 10137 Torino (IT); Gimeno, Noemi Valtuegna, 10137 Torino (IT); Novo, Emiliano, 10129 Torino (IT); Baldini, Luca, 10129 Torino (IT); Mercante, Luca, 10141 Torino (IT); Borello, Luisa, 10093 Collegno (TO) (IT); Musso, Andrea, 10095 Grugliasco (TO) (IT); Ceffa, Dario, 13900 Biella (IT); Accossato, Danilo, 10040 Pralormo (IT); Gianolio, Giuseppe, 14010 Cellarengo (AT) (IT); Rosso, Ilaria, 10064 Pinerolo (TO) (IT)
(74) Representative: Grünecker, Kinkeldey, Stockmair & Schwanhäusser Anwaltssozietät

(56) References cited:
- WO-A-02/058201
- US-A- 4 820 594
- US-A1- 2003 134 168
- US-A1- 2004 126 641
- US-A1- 2005 175 870
- PATENT ABSTRACTS OF JAPAN vol. 018, no. 681 (E-1649), 21 December 1994 (1994-12-21) -& JP 06 275295 A (SANYO ELECTRIC CO LTD), 30 September 1994 (1994-09-30)
- PATENT ABSTRACTS OF JAPAN vol. 2003, no. 12, 5 December 2003 (2003-12-05) -& JP 2005 340075 A (KYOCERA CORP), 8 December 2005 (2005-12-08)
- PATENT ABSTRACTS OF JAPAN vol. 1996, no. 10, 31 October 1996 (1996-10-31) -& JP 08 148166 A (MITSUBISHI HEAVY IND LTD), 7 June 1996 (1996-06-07)

## Description

The present invention relates to a combined heat and power plant and to a method of producing and using electrical and thermal energy with a combined heat and power plant comprising the following units: a burner and steam generator unit, a reformer unit for hydrogen production, at least one fuel cell stack, an exhaust gas system and a heat management system comprising a heat exchanger exchanging heat from a cooling system of a fuel cell stack to a thermal load, wherein the units of the combined heat and power plant are coupled in such a way that a certain type of energy produced by at least one of the units of the combined heat and power plant is usable by at least two different other units of the combined heat and power plant, and wherein an exhaust gas line of the reformer unit is thermally connected by a heat exchanger with the thermal load.

Such systems use typically natural gas to produce electric and thermal energy. The natural gas is consumed in the reformer unit to produce hydrogen. The hydrogen is electrochemically burned in the fuel cell system to produce an electric current and hot water.

The electric current produced by the fuel cell stack is then converted from DC into AC current and provided to an electric load. The hot water produced by the fuel cell stack is used in a thermal management system to provide the thermal load with thermal energy.

The fuel cell stack is coupled with the exhaust gas system which transfers the water vapor and the hydrogen residual gases of the fuel cell stack back to the burner and steam generator unit which provides heat and water vapor to the reformer unit. The reformer unit is supplied with methane and air by a gas management system.

Unfortunately, the reforming process of natural gas performed in the reformer unit generates impurities, such as CO and H₂S, that negatively affect the performance of PEM fuel cells. Moreover, if the hydrocarbon conversion is not complete, HC species can be present in the reformate gas. CO is known to poison, step by step, the membrane of a PEM fuel cell. This effect is widely studied and efforts are focused mainly on the preparation of CO-tolerant catalysts working below 100°C and on the preparation of high temperature-tolerant membranes because the CO absorption is weaker at higher temperatures. Some benefits were observed when a small amount of air is fed with the hydrogen into fuel cells to oxidize CO. Up to now, the use of Pt/Ru alloy catalysts is the most popularly employed solution to reduce the CO poisoning effect. In any case, PEM fuel cells require a CO concentration in the reformate gas below 50ppm.

The H₂S effect is even more drastic because it leads to an irreversible poisoning of PEM fuel cell catalysts. Therefore, a complete removal of H₂S before transferring the gas to a fuel cell stack is required.

The units of known combined heat and power plants are in most cases controlled by a controller unit which provides the software and an electronic system for control and diagnostic. It is the intention of most producers of fuel cell based combined heat and power plants to provide a so-called integrated balance of plant, by which all additional parts of the combined heat and power plant including peripheral equipment are integrated in the system.

For the fuel cell stack, PEM (proton exchange membrane) fuel cells with a polymer electrolyte membrane are often used. PEM fuel cells are relatively uncomplicated and are well suited for mobile use as a decentralized energy supply.

Dependent on the type and fuel, a fuel cell can theoretically reach an efficiency of 70 to nearly 100%. However, in practice, the actual efficiency which represents the relation between produced and supplied energy is lower, between 40 and 70%.

The document US 2005/175870 A1 describes a combined heat and power plant with a fuel processor assembly including a reformer and having at least one burner to drive the reforming reaction, one fuel cell stack, an exhaust gas system and a heat management system comprising heat exchanger units. Some of the units of the combined heat and power plant are coupled in such a way that heat produced by one of the units can be used by more than one other unit of the combined heat and power plant. For instance, it is mentioned that the burner of the fuel processor assembly can supply energy for reforming reaction wherein its exhaust can be used for a co-generative use such as to provide space heat or to heat potable water.

The document US 2004/0126641 A1 contains an electric power plant comprising an array of fuel cell systems which are electrically coupled in series to form a power base for supplying power to an electric load, wherein the fuel cell systems each comprising a regenerative fuel cell stack.

The document JP 06275295 A describes a fuel cell system comprising a heat exchange between exhaust gas of a fuel cell stack and a piping including a refrigerant leading to the effect that an indoor unit can be cooled. The same system can be used to heat the indoor unit by exchanging heat from the exhaust gas of the fuel cell stack by changing the direction of the flow of the refrigerant in the piping by a four-way valve.

The document US 4,820,594 discloses a method of starting a fuel cell power generation system in which fuel is not only used in a fuel reforming part of a fuel reformer to produce hydrogen, but also as fuel for a combustion heating part of the reformer. In this manner, fuel is used directly as a heating medium for elevating the temperature of the fuel cell power generation system. The document US 4,820,594 mentions in its introduction the possibility to provide a starting torch at the upper part of the reformer to elevate the temperature of the fuel reformer during start-up of the system.

The document US 2003/0134168 A1 discloses a keep-warm system for a fuel cell power plant to prevent freeze sensitive portions of the power plant, such as the cell stack assembly and the water management system, from freezing under extremely cold external temperatures, during extended storage periods of seven days or more. The system uses pre-stored unpressurized fuel, typically hydrogen, normally used to fuel the anode of the cell stack assembly, as fuel for a catalytic oxidation reaction at an extra catalytic burner included in the system. The fuel is catalytically reacted with an oxidant, such as air, to produce heated gas that convectively passes in heat exchange relation with the freeze sensitive portions of the power plant

A Further exemple of a combined heat and power plant can be found in US 2004/0115490 A1.

It is the object of the present invention to provide a combined heat and power plant and a method of producing and using electrical and thermal energy with a combined heat and power plant with an increased efficiency.

The object is solved by a combined heat and power plant of the above-mentioned type wherein a torch is provided between the reformer unit and the heat exchanger for the thermal load.

According to the present invention, the exhaust gas line of the reformer unit is connectable by a three-way valve with the fuel cell stack of the thermal load. By means of this system, the outlet gas of the reformer unit can be provided optionally to the fuel cell stack or to the thermal load. For instance, during a start-up of the reformer unit, the outlet gas can be unsuitable for the fuel cell stack because of a high carbon monoxide concentration. Nevertheless, the outlet gas is burnable and hot and can be used to warm up the thermal load. If the carbon monoxide concentration is of an acceptable value, the exhaust gas of the reformer unit can be switched to the fuel cell stack

The present invention offers the possibility to use one kind of energy produced by a unit of the combined heat and power plant at least twice. This way, a certain amount of energy that cannot be used in a conventional way, e.g. due to a temporarily decreased energy consumption by a unit, can be used by another unit of the combined heat and power plant so that this energy will not be lost. The result is that the combined heat and power plant of the present invention provides a higher efficiency.

According to an auspicious embodiment of the present invention, at least two fuel cell stacks are electrically coupled so that a first fuel cell stack can be powered by a second fuel cell stack. By this system, the electrical energy produced by second fuel cell stack can be used from a temporarily inoperative first fuel cell stack without the need to supply said first fuel cell stack with external electrical power.

In a fortunate example of the invention, the at least two fuel cell stacks are electrically connected in series by at least one electrically controllable switch. With the switches, the fuel cell stacks can be connected with and de-connected from each other, according to necessity.

Preferably, the first fuel cell stack is a regenerating fuel cell stack. Accordingly, the first fuel cell stack can be regenerated using the second fuel cell stack. If more than two fuel cell stacks are electrically coupled, it is possible to regenerate the stacks one by one using the other stacks.

According to another embodiment of the present invention, an anode and a cathode of the first fuel cell stack are coupled with a nitrogen feed line by three-way valves. By means of the nitrogen feed line, a near original condition of the fuel cell stack can be reached by applying a low concentration of the reactants to the fuel cell stack and applying nitrogen instead of hydrogen or air using the three-way valves leading to a decontamination effect of the membrane of the fuel cell stack.

According to a favorite example of the present invention, the burner unit is thermally connected with the reformer unit and with the thermal load. This embodiment is especially of interest in operative conditions with a low electric load in which the water produced within the thermal circuit of the fuel cell stack does not reach sufficient temperature and in which a quantum of heat produced by the burner unit can be used to increase the temperature of water supplied to the thermal load.

In a beneficial variant of the invention, the heat management system comprises a first heat exchanger exchanging heat from the cooling system of the fuel cell stack to the thermal load and a second heat exchanger exchanging heat from the burner unit to the thermal load. This way, the heat of the exhaust of the burner unit as well as the heat from the cooling system of the fuel cell stack can be especially efficiently supplied to the thermal load.

It is furthermore advantageous if the first heat exchanger of liquid to liquid heat exchanger and the second heat exchanger is a gas heat exchanger. This way, the heat produced by the burner unit as well as the heat produced by the fuel cell stack can be exchanged with a water circuit applying the thermal load with thermal energy.

According to a beneficial embodiment of the present invention, the first and second heat exchanger are thermally in series connection. In this manner, the first and the second heat exchanger can be provided in one heating circuit of the thermal load.

According to another favorable option of the present invention, the heat management system comprises a first and a second heat exchanger arranged in parallel and alternately connected with the cooling system of the fuel cell stack and alternately connected with the thermal load, wherein the second heat exchanger comprises a refrigerating system. Thus, the power produced by the fuel cell stack can be used for heating and refrigerating processes.

It is especially convenient if the refrigerating system comprises a lithium bromide refrigerating unit. This refrigerating unit is especially suited for residential purposes because the lowest temperature of such systems is 0°C what is well suited for a use of water as energy transfer medium.

According to yet another embodiment of the present invention, the first and the second heat exchangers are coupled with the cooling system of the fuel cell stack and with the thermal load by three-way valves. By this construction, the system can be easily switched from a warming system for the thermal load to a cooling system for the thermal load and vice versa.

It is furthermore possible to connect an exhaust gas line of the reformer unit thermally by a heat exchanger with the thermal load. Doing so, the exhaust gas of the reformer unit can be directly used to provide the thermal load with thermal energy.

It is recommendable to provide a burner between the thermal unit and the heat exchanger for the thermal load. By means of this burner, the gas coming from the reformer unit can be burned to produce heat which can be transferred to the thermal load.

According to a beneficial version of the present invention, the cooling system of the fuel cell stack is selectively thermally connected with a heating system of the reformer unit or with the thermal load. This system can be used to recover the heat produced by the fuel cell stack in the reformer unit. This is especially advantageous if high electric power but not high thermal power is required by the system. In these cases, extra thermal power of the fuel cell stack can be supplied to the reformer unit to make it possible to reduce methane consumption and to result in a better system efficiency.

Preferably, a heat exchanger is provided between the cooling system of the fuel cell stack and the reformer unit. This allows an easy transfer of the heat produced by the fuel cell stack to the reformer unit.

In yet another favorable example of the present invention, the burner and steam generator unit is thermally connected with the reformer unit and with the cooling system of the fuel cell stack. This embodiment is especially advantageous when the system is off and an external temperature is sub-zero. Then, a part of the warm air produced by the burner and steam generator unit set at a minimum load can flow into the reformer unit and another part can warm up the cooling system of the fuel cell stack so that both systems are supplied with at least a minimum amount of heat to prevent freezing.

The object of the invention is furthermore solved by a method of the above mentioned type, wherein a torch provided between the reformer unit and the heat exchanger for the thermal load bums gas coming from the reformer unit, wherein the produced heat is exchanged by the heat exchanger to the thermal load.

The inventive method makes it possible to use a certain type of energy at least twice so that the energy produced internally in the combined heat and power plant can be utilized largely internally, leading to high efficiency and variability of the whole system. The inventive method can furthermore decrease the consumption of external energy and gas supply.

According to a favorable embodiment of the present invention, a regenerating first fuel cell stack is electrically powered by the voltage generator of a second fuel cell stack. By means of this method, the internal energy produced by the second fuel cell stack can be used for regeneration of the first fuel cell stack without using an external power supply.

Preferably, the first fuel cell stack is regenerated by supplying nitrogen to an anode or a cathode of said first fuel cell stack. Using a nitrogen supply of the first fuel cell stack instead of hydrogen or an air supply, a low concentration of the reactants at the fuel cell stack can be reached to let the fuel cell work in a condition is which contaminants can be desorbed from its catalyst layer. This way, the fuel cell stack can be regenerated in a favored way.

According to another example of the invention, at least a part of heat produced by the burner and steam generator unit is used to supply the thermal load with heat. This is especially of interest in conditions with a low electric load in which the water of the heat management system supplying the thermal load with heat does not reach a sufficient temperature. In these conditions, an amount of heat produced by the burner unit can be used to increase the temperature of the water supplying the thermal load with heat.

It has been proved as advantageous to use the thermal energy produced by the fuel cell stack to alternately supply a heating or a cooling system for the thermal load. This principle can be used to provide the thermal load with heat or with cooling energy.

Preferentially, the thermal energy produced by the fuel cell stack is used for an air-conditioning system. The air-conditioning system can be used to condition buildings during the whole year for warming and refrigerating purposes.

In yet another variant of the present invention, exhaust gas of the reformer unit is used to heat the thermal load. This method can be used to exploit the thermal energy produced by the reformer unit, for instance during a start-up of the reformer unit in which the exhaust gas of the reformer unit can be supplied to the thermal load instead of the fuel cell stack.

In another beneficial embodiment of the invention, thermal energy produced by the fuel cell stack is used to heat the reformer unit. This way, thermal energy which is not used by the thermal load can be led back to the reformer unit what, in turn, needs a smaller amount of energy from the burner unit which reduces the methane consumption at the burner unit. In result, a better heat recovery, a reduced methane consumption and a better efficiency can be provided.

According to yet another example of the present invention, the burner unit is set on a low load during a short power-off time of the combined heat and power plant to heat the reformer unit and the cooling system of the fuel cell stack when an external temperature is sub-zero. By means of this method, freezing of the combined heat and power plant during short power-off times can be prevented.

According to another advantageous embodiment, a control system empties all water pipes of the combined heat and power plant during a long power-off time of the combined heat and power plant allowing air to flow into the reformer unit and the fuel cell stack. Then, dry air flows into the reformer unit and the fuel cell stack what prevents freezing during external temperatures below 0°C.

In the following, favored embodiments of the invention are described with reference to the accompanying drawings in which
Figure 1 schematically shows units of the combined heat and power plant with interconnections between the unit;
Figure 2 schematically shows a favorite gas supply for a regenerating process of a fuel cell stack;
Figure 3 schematically shows a system of fuel cell stacks which can be regenerated;
Figure 4 schematically shows a heat management system of the combined heat and power plant of Figure 1;
Figure 5 schematically shows a variant of the heat management system shown in Figure 4;
Figure 6 shows another heat management system of the present invention with a heating and a cooling system for a thermal load;
Figure 7 schematically shows yet another heat management system of the present invention which can be used during start-up and shut-down of a reformer unit;
Figure 8 schematically shows a next favored heat management system according to the present invention in which the heat of a fuel cell stack can be recovered for a reformer unit; and
Figure 9 schematically shows a variant of the present invention which can be used when the system is off and an external temperature is sub-zero.

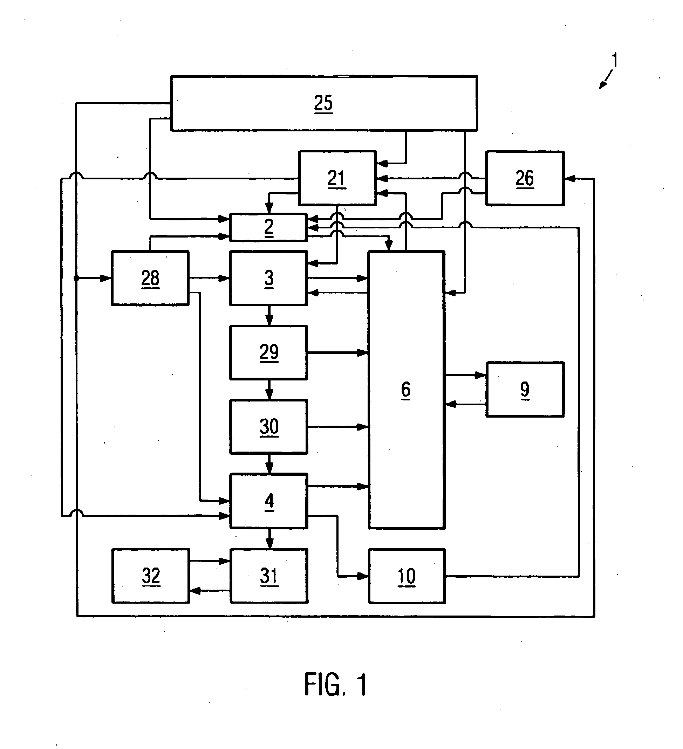

Figure 1 schematically shows a combined heat and power plant 1 according to the present invention. The combined heat and power plant 1 comprises a fuel cell based cogeneration system with an internal hydrogen generator. The combined heat and power plant 1 uses natural gas to produce electrical and thermal energy. The natural gas is consumed in a reformer unit 3 to produce hydrogen. The hydrogen is electrochemically burned in a fuel cell system consisting of at least one fuel cell stack 4 to produce an electric current and hot water. The stages of the combined heat and power plant are integrated in a complete system wherein operating conditions are correlated and controlled using a controller 25 and a single balance of plant.

The combined heat and power plant 1 does furthermore comprise a burner unit 2 and a steam generator and humidifier unit 21 which provide the reformer unit 3 with heat and steam, respectively, and the fuel cell stack 4 with wet gas and heat. The burner unit 2 is supplied with air and natural gas by an air supply unit 26 and by the gas management system 28. Furthermore, an exhaust 10 is provided in the combined heat and power plant 1, which receives water and hydrogen from the fuel cell stack 4 which are provided back to the burner 2.

In a reactor of the reformer unit 3, natural gas such as methane is fed by a gas management system 28. It is the object of the reformer unit 3 to produce hydrogen from methane. In practice, the reformer unit produces a mixture essentially consisting of hydrogen, carbon monoxide and carbon dioxide.

In the reformer unit 3, the natural gas coming from the gas management system 28 can react with water in a steam reforming process. This reaction occurs in the presence of a catalyst at a high temperature which is above 800°C and is endothermic. The reactants of the steam reforming processing need heat which is supplied by the burner unit 2 which is powered by methane. The chemical equation of the steam reforming process is

CH₄ + H₂O → CO + 3H₂

Another option is that the natural gas can react with air in a partial oxidation. Methane burns partially in an exothermic reaction that produces heat. The reaction occurs in the presence of catalysts at about 700° to 800°C according to the follow chemical equations:

CH₄ + ½ O₂ → CO + 2H₂
and
CH₄ + O₂ → CO₂ + 2H₂.

In other combined heat and power plants, the natural gas can react with water and air in an autothermal reforming process. This process is both a partial oxidation and a steam reforming process and the reaction is autothermal at about 800°C.

Downstream from the reforming unit 3 a water-gas-shift unit 29 is provided. The water-gas-shift unit 29 is devoted to reducing carbon monoxide produced by the reformer unit 3 from about 10% to about 1%. The according chemical reaction needs water and a catalyst and works at a temperature of about 450°C according to the following chemical equation:

CO + H₂O → CO₂ + H₂.

After the water-gas-shift unit 29 follows a carbon monoxide cleanup system 30. As fuel cells like proton exchange membrane fuel cells used in the fuel cell stack 4 require very low carbon monoxide levels, the carbon monoxide amount is to be reduced by the carbon monoxide cleanup system 30 from about 1% to about 20 to 50 ppm.

Carbon monoxide reduction can be performed by different processes: In a carbon monoxide preferential oxidation (CO-PROX) carbon monoxide is oxidized using air and a catalyst following the chemical reaction

CO + ½ O2 → CO₂.

Furthermore, CO can be reduced in a methanation process in which CO but also hydrogen is consumed to produce methane according to the chemical equation

CO + 3H₂ → CH₄ + H₂O.

If Pd-based membranes are used in the carbon monoxide cleanup system 30, CO is separated from hydrogen using physical processes based on membranes permeable only for hydrogen.

The gas produced by the reformer unit 3, the water-gas-shift unit 29 and the carbon monoxide cleanup system 30 as well as wet gas and heat produced by the burner unit 2 and the steam generator unit 21 are fed to the fuel cell stack unit 4. The fuel cell stack 4 converts chemical energy into electrical energy. The fuel cell stack 4 is characterized by an elevated efficiency, versatility and low impact on the environment.

The fuel cell stack 4 comprises an anode 11 and a cathode 12. At the anode 11 side, hydrogen diffuses in a catalyst layer where it splits into hydrogen protons and electrons according to the following chemical equation:

2H₂ → 4H⁺ + 4e⁻.

An electrical field drives protons, due to a chemical reaction, through the PEM membrane and electrons into an external electrical circuit. Oxygen disassociates at the cathode 12 side in the catalyst layer and combines with the hydrogen protons and electrons to form water:

O₂ + 4H⁺ + 4e⁻ → 2H₂O.

The overall reaction equation is:

2H₂ + O₂ → H₂O + electricity + heat.

This reaction has a defined maximum voltage of 1.23 volts. To reach a higher voltage, several fuel cells are connected electrically in series forming the fuel cell stack 4. Several fuel cell stacks 4 can be used with electrical serial connections.

The PEM stack(s) 4 of the combined heat and power plant 1 work at a low temperature of about 60° to 70°C so that the system startup is relatively fast.

The performance of the fuel cell stack 4 is strongly influenced by operative conditions of the combined heat and power plant 1. These conditions are controlled by a balance of plant comprising the gas management system 28, a water management system including a humidification system provided in the steam generator unit 21, an exhaust gas management 10, a heat management system 6 and a control system 25.

The gas management and supply system 28 which supplies hydrogen and air to the units of the combined heat and power plant 1 includes piping, electrovalves, flow measurement and control.

The exhaust gas management 10 works in an open mode and supplies the units of the combined heat and power plant 1 with hydrogen and transfers not-consumed hydrogen to other units of the combined heat and power plant 1 to utilize a quantum of hydrogen, for instance, in the burner unit 2.

The heat management system 6 comprises a heat exchanger 7 exchanging heat from a cooling system 8 of the fuel cell stack 4 to a thermal load 9. Since the fuel cell stack 4 reaction is exothermic, it is important to control the fuel cell stack 4 temperature by the cooling system 8. The heat management system 6 manages the hot water produced by the fuel cell stack 4 and its cooling.

The control system 25 includes software and electronic devices which measure and control the system parameters of different units of the combined heat and power plant 1.

The fuel cell stack 4 produces a DC current. As mentioned above, the maximum voltage produced by the fuel cell stack 4 is a function of the number of fuel cell stacks 4 and the number of fuel cells included in the fuel cell stack 4. The fuel cell stack 4 is coupled with an electrical network, and a power conditioner 31 is connected with the fuel cell stack 4. The power conditioner 31 is an electronic system that converts a variable DC current into a tri-phase AC current at a fixed required voltage. The produced voltage is supplied to an electric load 32.

In the combined heat and power plant 1, the reformer unit 3, the fuel cell stack 4 and the power conditioner 31 are integrated in the same balance of plant which has a single control system 25. The reformer unit 3, the fuel cell stack 4 and the power conditioner 31 have common components. The integration of the these components implies that some elements are redundant and can be eliminated.

In the heat management system 6, the heat flow of the reformer unit 3 and the fuel cell stack 4 are coupled with some efficiency with respect to single systems.

The control system 25 is configured in such a way that a common control system 25 reduces the number of measurements and a global control allows setting of correct conditions with respect to operational situations.

The gas management system 28 is constructed so that the gas supply of the fuel cell stack 4 coincides with the gas supply of the reformer unit 3.

In the water management system of the combined heat and power plant 1, the reformate gas coming from the reformer unit 3 is already humidified and is addressed directly to the anode(s) 11 of the fuel cell stack(s) 4.

In the exhaust gas management 10, the exhaust of the reformer unit 3 coincides with the gas supply of the fuel cell stack 4, and the gas exhaust of the fuel cell stack 4 is led to the burner unit 2 to be burned.

In the combined heat and power plant 1, a certain amount of n fuel cell stacks 4 are installed. These fuel cell stacks 4a, 4b, ..., 4n are connected electrically in serial connections.

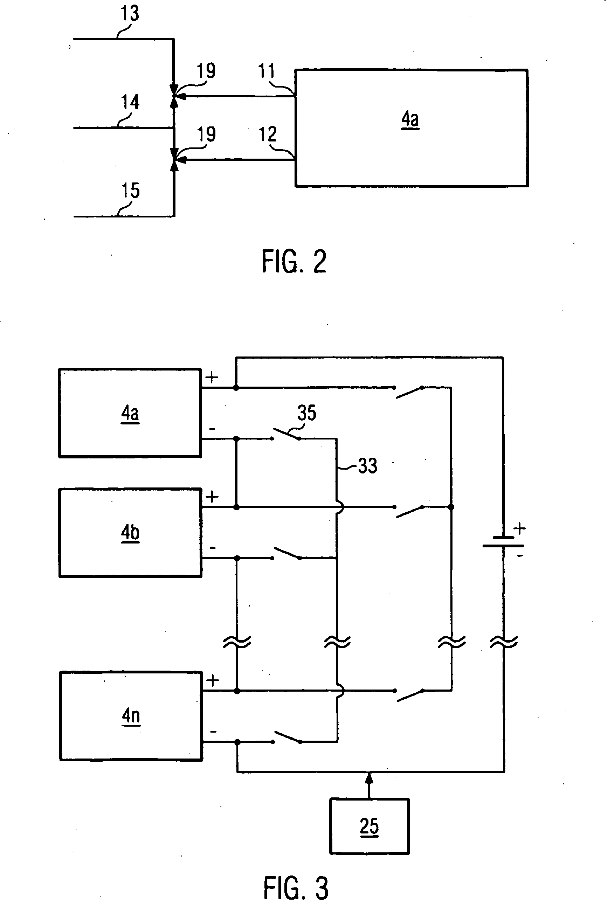

As shown in Figure 2, each fuel cell stack 4 has an anode 11 and a cathode 12 which are connected by three-way valves 19 with a hydrogen feed line 13, a nitrogen feed 14 and an air feed line 15 which are arranged in a parallel configuration.

With this system, nitrogen can be addressed with the nitrogen line 14 to the anode 11 or the cathode 12 side of each fuel cell stack 4 by switching the three-way electrovalves 19. The three-way valves 19 make it possible to separately address nitrogen to the cathode 12 side or to the anode 11 side of each of the n fuel cell stacks 4 of the combined heat and power plant 1.

By means of a nitrogen flow instead of hydrogen or air, a low concentration of one of the reactants in a certain fuel cell stack 4 can be reached.

To desorb poisons from the catalyst layer of the fuel cell stack 4, it is furthermore necessary to impose a voltage on the regenerating fuel cell stack 4. As shown in Figure 3, it is possible to use during the regeneration process of the fuel cell stack 4a the voltage generated by one of the other n fuel cell stacks 4b ... 4n to apply this voltage at the regenerating fuel cell stack 4a.

Figure 3 shows the electric grid to connect the fuel cell stacks 4a, 4b, ... , 4n in a serial configuration during normal operative conditions and to connect two fuel cell stacks to regenerate one fuel cell stack using the voltage generated from another one.

For this purpose, a double electric line 33, 34 is installed and 2n switches 35 controlled by software of the controller unit 25 are provided. By means of the principle shown in Figures 2 and 3, the fuel cell stacks 4a, 4b, ..., 4n can be regenerated one by one during low external load operative conditions.

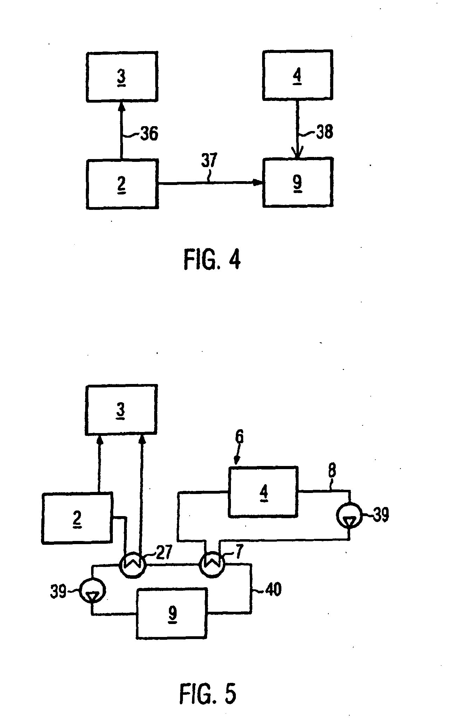

As shown in Figure 4, the burner unit 2 of the combined heat and power plant 1 supplies not only heat 36 to the reformer unit 3, but also supplies heat 37 to the thermal load 9 which is, in addition, supplied with heat 38 by the fuel cell stack 4.

During normal operating conditions, the fuel cell stack 4 produces electrical power and thermal heat due to the exothermic electrical reaction which takes place in the fuel cell stack 4. For this reason, the fuel cell stack 4 is coupled with the cooling system 8, as shown in Figure 5, which cools the fuel cell stack 4 during operation with water which is pumped by means of a pump 39 in the circuit of the cooling system 8.

The cooling system 8 produces hot water at the temperature of the fuel cell stack 4. This hot water delivers the thermal energy for supplying the thermal load 9. Thermal energy is exchanged between the cooling system 8 of the fuel cell stack 4 and a thermal circuit 40 supplying the thermal load 9 with thermal energy by a heat exchanger 7. The heat exchanger 7 is a liquid-to-liquid exchanger.

As shown in Figure 5, in an operative condition with a low electric load 32, the water of the thermal circuit 40 does not reach a sufficient temperature. In this condition, a quantum of heat produced by the burner unit 2 is used to increase the temperature of the water of the thermal circuit 40.

As shown in Figure 5, a second heat exchanger 27 is provided on the thermal circuit 40 and serially connected to the standard liquid-to-liquid heat exchanger 7. The second heat exchanger 27 is a gas-to-liquid heat exchanger.

The exhaust of the burner unit 2 is applied partially to the second heat exchanger 27 that exchanges heat from the exhaust to the water of the thermal circuit 40. This way, the water of the thermal circuit 40 increases its temperature up to a desired value in accordance with the requirements of the thermal load 9, even if the combined heat and power plant 1 works in a condition of a low electric load 32.

With this principle, it is possible to decouple thermal from electrical load which are in normal operating conditions directly proportional, granting the possibility to satisfy the aleatory request of certain users of the combined heat and power plant 1.

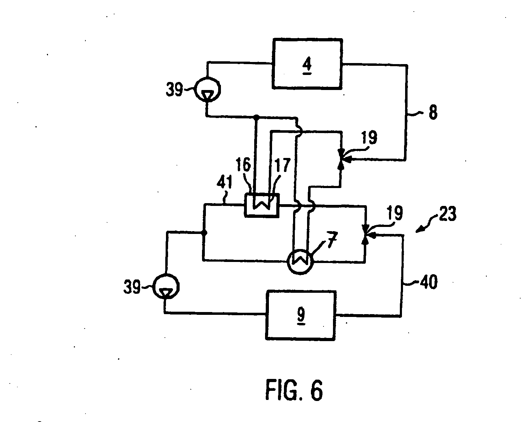

Figure 6 schematically shows another variant of the heat management system 6 realized in the combined heat and power plant 1.

As shown in Figure 6, the fuel cell stack 4 provides with its cooling system 8 a heating circuit 40 as well as a cooling circuit 41 comprising a refrigerating system 16 with thermal energy. By means of a three-way valve 19, the energy of the cooling system 8 can be supplied either to the cooling circuit 41 or to the thermal circuit 40.

If the cooling system 8 is switched to the thermal circuit 40, the thermal energy of the fuel cell stack 4 is transferred to the thermal circuit 40 by the conventional heat exchanger 7 provided on the thermal circuit 40.

The heat management system 6 shown in Figure 6 can be used as an air-condition system 23 to condition buildings during the whole year both for warming and for refrigerating processes. During a winter period, the heat exchanger 7 supplies thermal energy from the fuel cell stack 4 to the thermal circuit 40. During a summer period, the thermal energy produced by the fuel cell stack 4 is used in the circuit 41 which can be used to refrigerate the water in a building thermal circuit.

The refrigerating system 16 is based in the shown example on a lithium bromide plant. In other not-shown embodiments, it is also possible to use other refrigerating plants such as refrigerating machines working with ammonia.

In the embodiment shown, a building thermal controller (not shown) decides if the warming system 40 or the cooling circuit 41 is required. The two configuration systems are selected by switching three-way electrovalves 19 addressing the water flow of the cooling system 8 to the heat exchanger 7 of the thermal circuit 40 or to the heat exchanger 17 of the refrigerating system 16.

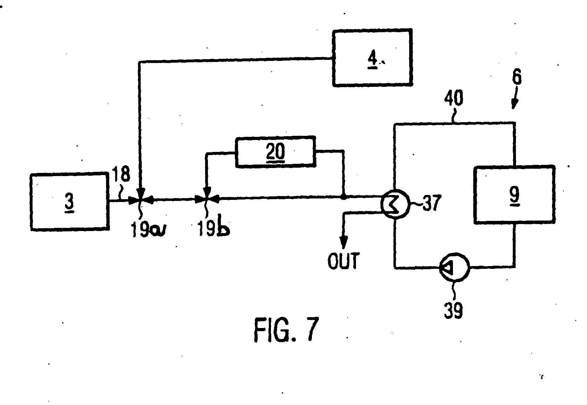

Figure 7 schematically shows another heat management principle of the combined heat and power plant 1 of the present invention. By means of a three-way valve 19a, exhaust gas of the reformer unit 3 can be supplied either to the fuel cell stack 4 or to the thermal load 9. With the shown principle, it is possible to recover energy from the outlet gas of the reformer unit 3 even when the reformer unit 3 is shut down. When the methane inlet of the reformer unit is closed, the reforming process is turned off so that the outlet gas of the reformer unit 3 does not contain hydrogen. In any case, until the system is cold, air is supplied to the burner unit 2 and water is supplied to the water-gas-shift unit 29 and the carbon monoxide cleanup system 30. For these reasons, the outlet gas of the reformer unit 3 is still hot and contains water vapor. During this period, the gas coming from the reformer unit 3 is addressed to the heat exchanger 37 to supply heat to the thermal circuit 40 of the thermal load 9.

The embodiment shown in Figure 7 can also be used during a startup of the reformer unit 3 during which the outlet gas of the reformer unit 3 is not suitable for the fuel cell stack 4 since it contains a high carbon monoxide concentration but it is burnable and hot. In order to exploit the thermal energy of the outlet gas of the reformer unit 3 in this stage, the outlet gas is addressed to the heat exchanger 37 connected to thermal circuit 40.

If the gas coming from the reformer unit 3 contains hydrogen or methane, it can be addressed to a burner or torch 20 upstream of the heat exchanger 37, wherein the burner or torch 20 bums this gas and produces heat.

To control the gas flow, pipelines are connected using three-way electrovalves 19a which are switchable between the fuel cell stack 4 and the heat management system 6 for supplying the thermal load 9 with thermal energy. Another electrovalve 19b addresses the gas to the torch 20.

Using the system shown in Figure 7 it is possible to produce heat power before and after a working process of the fuel cell stack 4 to recover more energy, even when the system is in a startup stage or is shutting down. This offers a high efficiency energy production since heat is extracted with no methane consumption, only by using the thermal inertia of the combined heat and power plant 1.

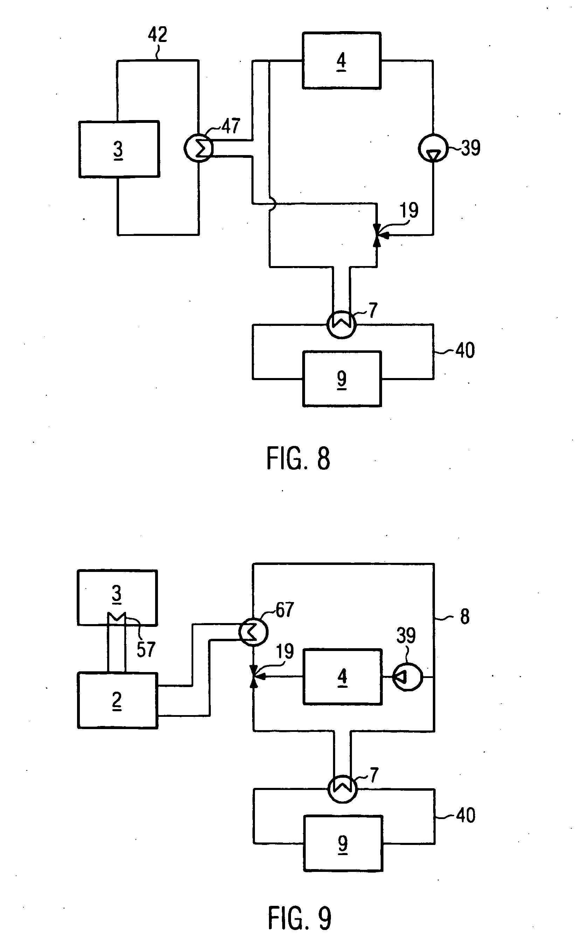

Figure 8 shows another example for heat management realizable according to the idea of the present invention.

In the embodiment shown, the fuel cell stack 4 is coupled by its cooling system 8 with a heating system 42 of the reformer unit 3 and with the thermal circuit 40 of the thermal load 9 by means of heat exchangers 7 and 47. Using a three-way electrovalve 19, the thermal energy produced by the fuel cell stack 4 can be either provided to the heating system 42 or to the thermal circuit 40.

The system shown in Figure 8 is especially suited to recover the heat produced from the fuel cell stack 4 if high electric power but not high thermal power is required from a user. In these cases, the cooling water of the cooling system 8 of the fuel cell stack 4 is switched through the electrovalve 19 to the heat exchanger 47 connected with the reformer unit 3. This way, extra thermal power is supplied to the reformer unit 3 and it is possible to reduce methane consumption at the burner unit 2. This embodiment allows a better heat recovery, a reduced methane consumption and a better efficiency of the combined heat and power plant 1.

Figure 9 shows another example of the combined heat and power plant 1 according to which the burner unit 2 is thermally connected with the reformer unit 3 and with the cooling system 8 of the fuel cell stack 4 by means of heat exchangers 57 and 67, respectively.

The principle shown in Figure 9 is especially suited when the combined heat and power plant 1 is off and the external temperature is sub-zero.

As the power-off time of the combined heat and power plant 1 is short, the burner unit 2 is operated at a minimum load. This way, the burner unit 2 produces a certain amount of heat so that a part of warm air flows by means of the heat exchanger 57 into the heating system 42 of the reformer unit 3 and another part of warm air produced by the burner unit 2 warms by means of the heat exchanger 67 the water of the cooling system 8 of the fuel cell stack 4.

In normal operative conditions, the cooling system 8 is connected with the thermal circuit 40 of the thermal load 9 by the heat exchanger 7. When thermal couples (not shown) detect a low temperature of one of the units of the combined heat and power plant 1, the burner unit 2 switches on and the cooling system 8 electrovalve 39 switches the cooling system 8 in connection with the burner unit 2. This way, warm water keeps a minimum temperature in the fuel cell stack(s) 4 and prevents damages which could result upon freezing.

If a user decides to turn off the system for a long time in sub-zero atmospheric conditions, the control system 25 of the combined heat and power plant 1 empties the water circuits of the combined heat and power plant 1. Then, dry air blows into the reformer unit 3 and the fuel cell stack 4 until the combined heat and power plant 1 is completely dry. Under these conditions, freezing is not a risk.

When the user of the combined heat and power plant 1 decides to turn on the system again, the control system 25 switches the burner unit 2 on and the water circuits of the combined heat and power plant 1 are filled again with water. Then, the above-mentioned procedure is used to gradually reach the operating temperature in the reformer unit 3 and the fuel cell stack 4, avoiding the risk correlated with a thermal shock.

By means of the implementation of the simple principle schematically shown in Figure 9, a safe installation of the combined heat and power plant 1 can be provided in any thermal condition. In particular, the risk of membrane deterioration and damage in the hydraulic system of the combined heat and power plant 1 due to ice dilatation can be prevented.

## Claims

1. A combined heat and power plant (1) comprising the following units: a burner unit (2), a reformer unit (3) for hydrogen production, at least one fuel cell stack (4), an exhaust gas system (10) and a heat management system (6) comprising a heat exchanger (7) exchanging heat from a cooling system (8) of the fuel cell stack (4) to a thermal load (9), wherein the units (2, 3, 4, 6, 9, 10) of the combined heat and power plant (1) are coupled in such a way that a certain type of energy produced by at least one of the units (2, 3, 4, 8, 9, 10) of the combined heat and power plant (1) is used by at least two different other units of the combined heat and power plant (1), and wherein an exhaust gas line (18) of the reformer unit (3) is thermally connected by a heat exchanger (37) with the thermal load (9),
**characterized In that**
a first three-way valve (19a) is provided along said exhaust gas line (18) with said first three-way valve (19a) allowing to supply exhaust gas of said reformer unit (3) either to said fuel cell stack (4) or to said thermal load (9).
a second three-way valve (19b) is provided along said exhaust gas line (18) downstream of said first three-way valve (19a), said second three-way valve (19b) allowing to supply gas from said reformer unit (3) either to said thermal load (9) or to a torch (20), wherein
said torch (20) is provided between the reformer unit (3) and the heat exchanger (37) for the thermal load (9).

2. A combined heat and power plant of claim 1,
**characterized in that**
at least two fuel cell stacks (4a, 4b) are electrically coupled so that a first fuel cell stack (4a) can be powered by a second fuel cell stack (4b).

3. A combined heat and power plant of claim 2,
**characterized in that**
the at least two fuel cell stacks (4a, 4b) are connected in series by electrically controllable switches (35).

4. A combined heat and power plant of claim 2 or 3,
**characterized in that**
the first fuel cell stack (4a) is a regenerating fuel cell stack.

5. A combined heat and power plant of at least one of the claims 2 to 4,
**characterized in that**
an anode (11) and a cathode (12) of the first fuel cell stack (4a) are coupled with a nitrogen feed line (14) by three-way valves (19).

6. A combined heat and power plant of claim 1,
**characterized in that**
the burner unit (2) is thermally connected with the reformer unit (3) and with the thermal load (9).

7. A combined heat and power plant of claim 6,
**characterized in that**
the heat management system (6) comprises a first heat exchanger (7) exchanging heat from the cooling system (8) of the fuel cell stack (4) to the thermal load (9) and a second heat exchanger (27) exchanging heat from the burner unit (2) to the thermal load (9).

8. A combined heat and power plant of claim 7,
**characterized in that**
the first heat exchanger (7) is a liquid-to-liquid heat exchanger and the second heat exchanger (27) is a gas-to liquid heat exchanger.

9. A combined heat and power plant of claim 7,
**characterized in that**
the first and the second heat exchanger (7, 27) are serial connected.

10. A combined heat and power plant of claim 1,
**characterized in that**
the heat management system (6) comprises a first heat exchanger (7) and a second heat exchanger (17) arranged in parallel and alternately connected with the cooling system (8) of the fuel cell stack (4) and alternately connected with the thermal load (9), wherein the second heat exchanger (17) comprises a refrigerating system (16).

11. A combined heat and power plant of claim 10,
**characterized in that**
the refrigerating system (16) comprises a lithium bromide refrigerating unit.

12. A combined heat and power plant of claim 10 or 11.
**characterized in that**
the first and the second heat exchangers (7, 17) are coupled with the cooling system (8) of the fuel cell stack (4) and with the thermal load (9) by three-way valves (19).

13. A combined heat and power plant of claim 1,
**characterized in that**
the cooling system (8) of the fuel cell stack (4) is thermally connected with a heating system (42) of the reformer unit (3) or with the thermal load (9).

14. A combined heat and power plant of claim 13,
**characterized in that**
a heat exchanger (47) is provided between the cooling system (8) of the fuel cell stack (4) and the reformer unit (3).

15. A combined heat and power plant of claim 1,
**characterized in that**
the burner unit (2) is thermally connected with the reformer unit (3) and with the cooling system (8) of the fuel cell stack (4).

16. A method of producing and using electric and thermal energy by a combined heat and power plant (1) comprising the following units: a burner unit (2), a reformer unit (3) for hydrogen production, at least one fuel cell stack (4), an exhaust gas system (5) and a heat management system (6) comprising a heat exchanger (7) exchanging heat from a cooling system (8) of the fuel cell stack (4) to a thermal load (9), wherein a certain type of energy produced by at least one of the units (2, 3, 4, 5, 6, 9) of the combined heat and power plant (1) is used by at least two different other units of the combined heat and power plant (1), and wherein exhaust gas of the reformer unit (3) is used to heat the thermal load (9),
**characterized in that**
said exhaust gas of the reformer unit (3) is supplied through a first three-way valve (19a) either to said fuel cell stack (4) or to said thermal load (9),
said exhaust gas of the reformer unit (3) is supplied through a second three-way valve (19b) provided downstream of said first three-way valve (19a) either to said thermal load (9) or to a torch (20), wherein
said torch (20) is provided between the reformer unit (3) and the heat exchanger (37) for the thermal load (9) and bums gas coming from the reformer unit (3), wherein the produced heat is exchanged by the heat exchanger (37) to the thermal load (9).

17. The method of claim 16,
**characterized in that**
a regenerating first fuel cell stack (4a) is electrically powered by the voltage generated by a second fuel cell stack (4b).

18. The method of claim 17,
**characterized in that**
the first fuel cell stack (4a) is regenerated by supplying nitrogen to an anode (11) or a cathode (12) of said first fuel cell stack (4a).

19. The method of claim 16,
**characterized in that**
at least a part of heat produced by the burner unit (2) is used to supply the thermal load (9) with heat.

20. The method of claim 16,
**characterized in that**
thermal energy produced from the fuel cell stack (4) is alternately used to supply a heating system (40) or a cooling system (41) for the thermal load (9).

21. The method of claim 20,
**characterized in that**
the thermal energy produced by the fuel cell stack (4) is used for an air-conditioning system (23).

22. The method of claim 16,
**characterized in that**
thermal energy produced by the fuel cell stack (4) is used to heat the reformer unit (3).

23. The method of claim 16,
**characterized in that**
the burner unit (2) is set on a low load during a short power-off time of the combined heat and power plant (1) to heat the reformer unit (3) and the cooling system (8) of the fuel cell stack (4) when an external temperature is subzero.

24. The method of claim 23,
**characterized in that**
a control system (25) empties water pipes of the combined heat and power plant (1) during a long power-off time of the combined heat and power plant (1) allowing air to flow into the reformer unit (3) and the fuel cell stack (4).

## Patentansprüche

1. Kombinierte Kraft-Wärme-Anlage (1), umfassend die nachfolgenden Einheiten: eine Brennereinheit (2), eine Reformereinheit (3) zur Wasserstoffherstellung, wenigstens einen Brennstoffzellenstapel (4), ein Abgassystem (10) und ein Wärmeverarbeitungssystem (6) mit einem Wärmetauscher (7), der Wärme aus einem Kühlsystem (8) des Brennstoffzellenstapels (4) mit einer thermischen Last (9) tauscht, wobei die Einheiten (2, 3, 4, 6, 9, 10) der kombinierten Kraft-Wärme-Anlage (1) derart gekoppelt sind, dass eine bestimmte Art von Energie, die von wenigstens einer der Einheiten (2, 3, 4, 6, 9, 10) der kombinierten Kraft-Wärme-Anlage (1) hergestellt wird, von wenigstens zwei verschiedenen anderen Einheiten der kombinierten Kraft-Wärme-Anlage (1) verwendet wird, und wobei eine Abgasleitung (18) der Reformereinheit (3) thermisch durch einen Wärmetauscher (37) mit der thermischen Last (9) verbunden ist,
**dadurch gekennzeichnet, dass**
ein erstes Dreiwegeventil (19a) entlang der Abgasleitung (18) vorgesehen ist, wobei das erste Dreiwegeventil (19a) ermöglicht, dass Abgas der Reformereinheit (3) entweder dem Brennstoffzellenstapel (4) oder der thermischen Last (9) zugeleitet wird,
ein zweites Dreiwegeventil (19b) entlang der Abgasleitung (18) stromabwärts von dem ersten Dreiwegeventil (19a) vorgesehen ist, wobei das zweite Dreiwegeventil (19b) ermöglicht, dass Gas aus der Reformereinheit (3) entweder der thermischen Last (9) oder einem Abfackler (20) zugeleitet wird,
wobei der Abfackler (20) zwischen der Reformereinheit (3) und dem Wärmetauscher (37) für die thermische Last (9) vorgesehen ist.

2. Kombinierte Kraft-Wärme-Anlage nach Anspruch 1, **dadurch gekennzeichnet, dass** wenigstens zwei Brennstoffzellenstapel (4a, 4b) elektrisch derart gekoppelt sind, dass ein erster Brennstoffzellenstapel (4a) von einem zweiten Brennstoffzellenstapel (4b) mit Energie versorgt werden kann.

3. Kombinierte Kraft-Wärme-Anlage nach Anspruch 2, **dadurch gekennzeichnet, dass** die wenigstens zwei Brennstoffzellenstapel (4a, 4b) in Reihe durch elektrisch steuerbare Schalter (35) verbunden sind.

4. Kombinierte Kraft-Wärme-Anlage nach Anspruch 2 oder 3, **dadurch gekennzeichnet, dass** der erste Brennstoffzellenstapel (4a) ein regenerierender Brennstoffzellenstapel ist.

5. Kombinierte Kraft-Wärme-Anlage nach wenigstens einem der Anspruche 2 bis 4, **dadurch kennzeichnet, dass** eine Anode (11) und eine Kathode (12) des ersten Brennstoffzellenstapels (4a) mit einer Stickstoffzuführleitung (14) durch Dreiwegeventile (19) gekoppelt sind.

6. Kombinierte Kraft-Wärme-Anlage nach Anspruch 1, **dadurch gekennzeichnet, dass** die Brennereinheit (2) thermisch mit der Reformereinheit (3) und mit der thermischen Last (9) verbunden ist.

7. Kombinierte Kraft-Wärme-Anlage nach Anspruch 6, **dadurch gekennzeichnet, dass** das Wärmeverarbeitungssystem (6) einen ersten Wärmetauscher (7), der Wärme aus dem Kühlsystem (8) des Brennstoffzellenstapels (4) mit der thermischen Last (9) tauscht, und einen zweiten Wärmetauscher (27), der Wärme aus der Brennereinheit (2) mit der thermischen Last (9) tauscht, umfasst.

8. Kombinierte Kraft-Wärme-Anlage nach Anspruch 7, **dadurch gekennzeichnet, dass** der erste Wärmetauscher (7) ein Flüssigkeit-zu-Flüssigkeit-Wärmetauscher ist und der zweite Wärmetauscher (27) ein Gas-zu-Flüssigkeit-Wärmetauscher ist.

9. Kombinierte Kraft-Wärme-Anlage nach Anspruch 7, **dadurch gekennzeichnet, dass** der erste und der zweite Wärmetauscher (7, 27) in Reihe verbunden sind.

10. Kombinierte Kraft-Wärme-Anlage nach Anspruch 1, **dadurch gekennzeichnet, dass** das Wärmeverarbeitungssystem (6) einen ersten Wärmetauscher (7) und einen zweiten Wärmetauscher (17) umfasst, die parallel und abwechselnd mit dem Kühlsystem (8) des Brennstoffzellenstapels (4) verbunden sowie abwechselnd mit der thermischen Last (9) verbunden sind, wobei der zweite Wärmetauscher (17) ein Abkühlsystem (16) umfasst.

11. Kombinierte Kraft-Wärme-Anlage nach Anspruch 10, **dadurch gekennzeichnet, dass** das Abkühlsystem (16) eine Lithium-Bromid-Abkühleinheit umfasst.

12. Kombinierte Kraft-Wärme-Anlage nach Anspruch 10 oder 11, **dadurch gekennzeichnet, dass** der erste und der zweite Wärmetauscher (7, 17) mit dem Kühlsystem (8) des Brennstoffzellenstapels (4) und mit der thermischen Last (9) durch Dreiwegeventile (19) gekoppelt sind.

13. Kombinierte Kraft-Wärme-Anlage nach Anspruch 1, **dadurch gekennzeichnet, dass** das Kühlsystem (8) des Brennstoffzellenstapels (4) thermisch mit einem Erwärmungssystem (42) der Reformereinheit (3) oder mit der thermischen Last (9) verbunden ist.

14. Kombinierte Kraft-Wärme-Anlage nach Anspruch 13, **dadurch gekennzeichnet, dass** ein Wärmetauscher (47) zwischen dem Kühlsystem (8) des Brennstoffzellenstapels (4) und der Reformereinheit (3) vorgesehen ist.

15. Kombinierte Kraft-Wärme-Anlage nach Anspruch 1, **dadurch gekennzeichnet, dass** die Brennereinheit (2) thermisch mit der Reformereinheit (3) und mit dem Kühlsystem (8) des Brennstoffzellenstapels (4) verbunden ist.

16. Verfahren zum Herstellen und Verwenden von elektrischer und thermischer Energie durch eine kombinierte Kraft-Wärme-Anlage (1), umfassend die nachfolgenden Einheiten: eine Brennereinheit (2), eine Reformereinheit (3) zur Wasserstoffherstellung, wenigstens einen Brennstoffzellenstapel (4), ein Abgassystem (5) und ein Wärmeverarbeitungssystem (6), mit einem Wärmetauscher (7), der Wärme aus einem Kühlsystem (8) des Brennstoffzellenstapels (4) mit einer thermischen Last (9) tauscht, wobei eine bestimmte Art von Energie, die von wenigstens einer der Einheiten (2, 3, 4, 5, 6, 9) der kombinierten Kraft-Wärme-Anlage (1) hergestellt wird, von wenigstens zwei verschiedenen anderen Einheiten der kombinierten Kraft-Wärme-Anlage (1) verwendet wird und wobei Abgas der Reformereinheit (3) zum Erwärmen der thermischen Last (9) verwendet wird,
**dadurch gekennzeichnet, dass**
das Abgas der Reformereinheit (3) durch ein erstes Dreiwegeventil (19a) entweder dem Brennstoffzellenstapel (4) oder der thermischen Last (9) zugeleitet wird,
das Abgas der Reformereinheit (3) durch ein stromabwärts von dem ersten Dreiwegeventil (19a) vorgesehenes zweites Dreiwegeventil (19b) entweder der thermischen Last (9) oder einem Abfackler (20) zugeleitet wird,
wobei der Abfackler (20) zwischen der Reformereinheit (3) und dem Wärmetauscher (37) für die thermische Last (9) vorgesehen ist und aus der Reformereinheit (3) kommendes Gas verbrennt, wobei die hergestellte Wärme durch den Wärmetauscher (37) mit der thermischen Last (9) getauscht wird.

17. Verfahren nach Anspruch 16, **dadurch gekennzeichnet, dass** eine regenerierender erster Brennstoffzellenstapel (4a) elektrisch durch diejenige Spannung mit Energie versorgt wird, die von einem zweiten Brennstoffzellenstapel (4b) erzeugt wird.

18. Verfahren nach Anspruch 17, **dadurch gekennzeichnet, dass** der erste Brennstoffzellenstapel (4a) durch Zuleiten von Stickstoff zu einer Anode (11) oder einer Kathode (12) des ersten Brennstoffzellenstapels (4a) regeneriert wird.

19. Verfahren nach Anspruch 16, **dadurch gekennzeichnet, dass** wenigstens ein Teil der von der Brennereinheit (2) hergestellten Wärme verwendet wird, um die thermische Last (9) mit Wärme zu versorgen.

20. Verfahren nach Anspruch 16, **dadurch gekennzeichnet, dass** die von dem Brennstoffzellenstapel (4) hergestellte thermische Energie abwechselnd verwendet wird, um ein Erwärmungssystem (40) oder ein Kühlsystem (41) für die thermische Last (9) zu versorgen.

21. Verfahren nach Anspruch 20, **dadurch gekennzeichnet, dass** die von dem Brennstoffzellenstapel (4) hergestellte thermische Energie für ein Klimaanlagensystem (23) verwendet wird.

22. Verfahren nach Anspruch 16, **dadurch gekennzeichnet, dass** die von dem Brennstoffzellenstapel (4) hergestellte thermische Energie verwendet wird, um die Reformereinheit (3) zu erwärmen.

23. Verfahren nach Anspruch 16, **dadurch gekennzeichnet, dass** die Brennereinheit (2) während einer kurzen Energieversorgungsunterbrechungszeit der kombinierten Kraft-Wärme-Anlage (1) auf niedrige Last gesetzt wird, um die Reformereinheit (3) und das Kühlsystem (8) des Brennstoffzellenstapels (4) zu erwärmen, wenn eine Außentemperatur unter Null ist.

24. Verfahren nach Anspruch 23, **dadurch gekennzeichnet, dass** ein Steuersystem (25) während einer langen Energieversorgungsunterbrechungszeit der kombinierten Kraft-Wärme-Anlage (1) Wasserrohre der kombinierten Kraft-Wärme-Anlage (1) leert, um zu ermöglichen, dass Luft in die Reformereinheit (3) und den Brennstoffzellenstapel (4) strömt.

## Revendications

1. Installation de génération combinée de chaleur et de puissance (1) comprenant les unités suivantes : une unité de brûleur (2), une unité de reformage (3) pour la production d'hydrogène, au moins un empilement de piles à combustible (4), un système de gaz d'échappement (10) et un système de gestion de chaleur (6) comprenant un échangeur de chaleur (7) effectuant un échange de chaleur depuis un système de refroidissement (8) de l'empilement de piles à combustible (4) vers une charge thermique (9), les unités (2, 3, 4, 6, 9, 10) de l'installation de génération combinée de chaleur et de puissance (1) étant couplées de manière à ce qu'un certain type d'énergie produit par l'une au moins des unités (2, 3, 4, 6, 9, 10) de l'installation de génération combinée de chaleur et de puissance (1) soit utilisé par au moins deux autres unités différentes de l'installation de génération combinée de chaleur et de puissance (1), et une conduite de gaz d'échappement (18) de l'unité de reformage (3) étant reliée thermiquement à la charge thermique (9) par un échangeur de chaleur (37),
**caractérisée en ce que**
une première vanne à trois voies (19a) est prévue le long de ladite conduite de gaz d'échappement (18), ladite première vanne à trois voies (19a) permettant de fournir les gaz d'échappement de ladite unité de reformage (3) soit audit empilement de piles à combustible (4), soit à ladite charge thermique (9),
une seconde vanne à trois voies (19b) est prévue le long de ladite conduite de gaz d'échappement (18), en aval de ladite première vanne à trois voies (19a), ladite seconde vanne à trois voies (19b) permettant de fournir les gaz d'échappement de ladite unité de reformage (3) soit à ladite charge thermique (9), soit à une torche (20),
ladite torche (20) étant prévue entre l'unité de reformage (3) et l'échangeur de chaleur (37) de la charge thermique (9).

2. Installation de génération combinée de chaleur et de puissance selon la revendication 1,
**caractérisée en ce qu'**au moins deux empilements de piles à combustible (4a, 4b) sont couplés électriquement de façon à ce qu'un premier empilement de piles à combustible (4a) puisse être alimenté en énergie par un second empilement de piles à combustible (4b).

3. Installation de génération combinée de chaleur et de puissance selon la revendication 2,
**caractérisée en ce que** les deux empilements de piles à combustible (4a, 4b) sont reliés en série par des commutateurs électriquement contrôlables (35).

4. Installation de génération combinée de chaleur et de puissance selon la revendication 2 ou la revendication 3,
**caractérisée en ce que** le premier empilement de piles à combustible (4a) est un empilement de piles à combustible à régénération.

5. Installation de génération combinée de chaleur et de puissance selon l'une au moins des revendications 2 à 4,
**caractérisée en ce qu'**une anode (11) et une cathode (12) du premier empilement de piles à combustible (4a) sont couplées à une conduite d'alimentation en azote (14) par des vannes à trois voies (19).

6. Installation de génération combinée de chaleur et de puissance selon la revendication 1,
**caractérisée en ce que** l'unité de brûleur (2) est reliée thermiquement à l'unité de reformage (3) et à la charge thermique (9).

7. Installation de génération combinée de chaleur et de puissance selon la revendication 6,
**caractérisée en ce que** le système de gestion de chaleur (6) comprend un premier échangeur de chaleur (7) effectuant un échange de chaleur depuis le système de refroidissement (8) de l'empilement de piles à combustible (4) vers la charge thermique (9), et un second échangeur de chaleur (27) effectuant un échange de chaleur depuis l'unité de brûleur (2) vers la charge thermique (9).

8. Installation de génération combinée de chaleur et de puissance selon la revendication 7,
**caractérisée en ce que** le premier échangeur de chaleur (7) est un échangeur de chaleur de liquide/liquide et le second échangeur de chaleur (27) est un échangeur de chaleur gaz /liquide.

9. Installation de génération combinée de chaleur et de puissance selon la revendication 7,
**caractérisée en ce que** le premier et le second échangeur de chaleur (7, 27) sont reliés en série.

10. Installation de génération combinée de chaleur et de puissance selon la revendication 1,
**caractérisée en ce que** le système de gestion de chaleur (6) comprend un premier échangeur de chaleur (7) et un second échangeur de chaleur (17) disposés en parallèle et reliés en alternance au système de refroidissement (8) de l'empilement de piles à combustible (4) et reliés en alternance à la charge thermique (9), le second échangeur de chaleur (17) comprenant un système de réfrigération (16).

11. Installation de génération combinée de chaleur et de puissance selon la revendication 10,
**caractérisée en ce que** le système de réfrigération (16) comprend une unité de réfrigération par bromure de lithium.

12. Installation de génération combinée de chaleur et de puissance selon la revendication 10 ou la revendication 11,
**caractérisée en ce que** le premier et le second échangeur de chaleur (7, 17) sont couplés au système de refroidissement (8) de l'empilement de piles à combustible (4) et à la charge thermique (9) par des vannes à trois voies (19).

13. Installation de génération combinée de chaleur et de puissance selon la revendication 1,
**caractérisée en ce que** le système de refroidissement (8) de l'empilement de piles à combustible (4) est relié thermiquement à un système de chauffage (42) de l'unité de reformage (3) ou à la charge thermique (9).

14. Installation de génération combinée de chaleur et de puissance selon la revendication 13,
**caractérisée en ce qu'**un échangeur de chaleur (47) est prévu entre le système de refroidissement (8) de l'empilement de piles à combustible (4) et l'unité de reformage (3).

15. Installation de génération combinée de chaleur et de puissance selon la revendication 1,
**caractérisée en ce que** l'unité de brûleur (2) est reliée thermiquement à l'unité de reformage (3) et au système de refroidissement (8) de l'empilement de piles à combustible (4).

16. Procédé de production et d'utilisation d'énergie électrique et thermique par une installation de génération combinée de chaleur et de puissance (1) comprenant les unités suivantes : une unité de brûleur (2), une unité de reformage (3) pour la production d'hydrogène, au moins un empilement de piles à combustible (4), un système de gaz d'échappement (5) et un système de gestion de chaleur (6) comprenant un échangeur de chaleur (7) effectuant un échange de chaleur depuis un système de refroidissement (8) de l'empilement de piles à combustible (4) vers une charge thermique (9), un certain type d'énergie produit par l'une au moins des unités (2, 3, 4, 5, 6, 9) de l'installation de génération combinée de chaleur et de puissance (1) étant utilisé par au moins deux autres unités différentes de l'installation de génération combinée de chaleur et de puissance (1), et les gaz d'échappement de l'unité de reformage (3) étant utilisés pour chauffer la charge thermique (9),
**caractérisé en ce que** lesdits gaz d'échappement de l'unité de reformage (3) sont fournis par l'intermédiaire d'une première vanne à trois voies (19a) soit audit empilement de piles à combustible (4), soit à ladite charge thermique (9),
lesdits gaz d'échappement de l'unité de reformage (3) sont fournis par l'intermédiaire d'une seconde vanne à trois voies (19b) prévue en aval de ladite première vanne à trois voies (19a) soit à ladite charge thermique (9), soit à une torche (20), dans lequel
ladite torche (20) est prévue entre l'unité de reformage (3) et l'échangeur de chaleur (37) de la charge thermique (9) et brûle les gaz provenant de l'unité de reformage (3), un échange de la chaleur produite étant effectué par l'échangeur de chaleur (37) vers la charge thermique (9).

17. Procédé selon la revendication 16,
**caractérisé en ce qu'**un premier empilement de piles à combustible à régénération (4a) est alimenté en énergie électrique par la tension générée par un second empilement de piles à combustible (4b).

18. Procédé selon la revendication 17,
**caractérisé en ce que** le premier empilement de piles à combustible (4a) est régénéré par la fourniture d'azote à une anode (11) ou une cathode (12) dudit premier empilement de piles à combustible (4a).

19. Procédé selon la revendication 16,
**caractérisé en ce qu'**au moins une partie de la chaleur produite par l'unité de brûleur (2) est utilisée pour fournir de la chaleur à la charge thermique (9).

20. Procédé selon la revendication 16,
**caractérisé en ce que** l'énergie thermique produite à partir de l'empilement de piles à combustible (4) est utilisée en alternance pour alimenter un système de chauffage (40) ou un système de refroidissement (41) de la charge thermique (9).

21. Procédé selon la revendication 20,
**caractérisé en ce que** l'énergie thermique produite à partir de l'empilement de piles à combustible (4) est utilisée pour un système de conditionnement d'air (23).

22. Procédé selon la revendication 16,
**caractérisé en ce que** l'énergie thermique produite à partir de l'empilement de piles à combustible (4) est utilisée pour chauffer l'unité de reformage (3).

23. Procédé selon la revendication 16,
**caractérisé en ce que** l'unité de brûleur (2) est réglée sur une charge faible pendant un cours temps de mise hors tension de l'installation de génération combinée de chaleur et de puissance (1) pour chauffer l'unité de reformage (3) et le système de refroidissement (8) de l'empilement de piles à combustible (4) lorsqu'une température extérieure est en dessous de zéro.

24. Procédé selon la revendication 23,
**caractérisé en ce qu'**un système de commande (25) vide les tuyaux d'eau de l'installation de génération combinée de chaleur et de puissance (1) pendant un long temps de mise hors tension de l'installation de génération combinée de chaleur et de puissance (1) pour permettre à l'air de pénétrer dans l'unité de reformage (3) et l'empilement de piles à combustible (4).
